# EUROPÄISCHE PATENTSCHRIFT

(11) **EP 1 024 567 B1**
(45) Veröffentlichungstag und Bekanntmachung des Hinweises auf die Patenterteilung: **17.05.2006**
(21) Anmeldenummer: 99119106.5
(22) Anmeldetag: 04.10.1999
(51) Int. Cl.: H02B 1/04

(54) **Schalter**
Switch
Interrupteur

(30) Priorität: 29.01.1999 DE 19903521
(43) Veröffentlichungstag der Anmeldung: 02.08.2000
(73) Patentinhaber: Valeo Schalter und Sensoren GmbH, 74321 Bietigheim-Bissingen (DE)
(72) Erfinder: Weber, Adam, 74321 Bietigheim-Bissingen (DE); Engel, Petra, 70806 Kornwestheim (DE); Bosch, Jürgen, 86748 Marktoffingen (DE); Bötz, Jakob, 74379 Ingersheim (DE)
(74) Vertreter: Dreiss, Fuhlendorf, Steimle & Becker

(56) Entgegenhaltungen:
- DE-U- 8 322 592
- US-A- 4 603 829

## Beschreibung

Die Erfindung betrifft einen Schalter mit einer gehäuseartigen Schalteraufnahme und einem in der Schalteraufnahme zu befestigenden Befestigungsteil, wobei die Schalteraufnahme oder das Befestigungsteil wenigstens einen Aufnahmeschlitz und das Befestigungsteil oder die Schalteraufnahme einen im Aufnahmeschlitz festlegbaren Befestigungszapfen aufweisen, wobei der Befestigungszapfen vom Aufnahmeschlitz geführt wird und diesen durchsetzt. (Siehe DE-U-8322592).

Es ist bekannt, ein erstes Schalterteil in einem anderen Schalterteil unterzubringen, wobei der andere Schalterteil gehäuseartig ausgebildet ist. Zur gegenseitigen Befestigung der beiden Schalterteile wurde bereits vorgeschlagen Aufnahmenuten bzw. Aufnahmeschlitze vorzusehen, in welche Befestigungszapfen eingreifen. Es hat sich jedoch gezeigt, dass bei aus Kunststoff hergestellten Schalteraufnahmen diese seitlich ausweichen können, wodurch der Befestigungszapfen außer Eingriff vom Aufnahmeschlitz kommt. Derartige Schalter sind nicht sicher gegen unbeabsichtigtes Lösen. Um dies zu vermeiden wurden die Schalteraufnahmen aus einem formstabilen Material hergestellt, z.B. aus Magnesium-Aluminium Druckguß, was zum einen teuer, zum anderen relativ aufwendig ist.

Der Erfindung liegt daher die Aufgabe zugrunde, einen Schalter bereitzustellen, welcher preiswert herzustellen ist, eine kurze Montagezeit aufweist und dennoch sicher gegen unbeabsichtigtes gegenseitiges Lösen der einzelnen Schalterteile ist.

Diese Aufgabe wird bei einem Schalter der eingangs genannten Art erfindungsgemäß dadurch gelöst, dass der Befestigungszapfen ein freies Ende aufweist, welches mit einer Materialverdickung versehen ist.

Die erfindungsgemäße Ausgestaltung sieht also vor, dass das freie Ende mit einer Materialanhäufung bzw. -verdickung versehen ist, so dass der Querschnitt des freien Endes größer ist, als der Querschnitt des restlichen Befestigungszapfens. Hierdurch wird der wesentliche Vorteil geschaffen, dass der Aufnahmeschlitz vom Zapfen vollständig durchgriffen wird und dass der Zapfen auf der anderen Seite aus dem Aufnahmeschlitz heraustritt, wo sich dann die Materialverdickung befindet, die den Aufnahmeschlitz hintergreift. Durch diesen Hintergriff wird vermieden, dass bei einer Verformung der Schalteraufnahme der Befestigungszapfen aus dem Aufnahmeschlitz herausgezogen wird. Durch den Hintergriff des Aufnahmeschlitzes wird zudem eine Formstabilisierung der Schalteraufnahme erzielt, da diese durch die Materialverdickung am Befestigungsteil gehalten wird. Bevorzugt entspricht die Länge des Befestigungszapfens zwischen der Materialverdickung und dem Befestigungsteil in etwa der Wandstärke der Schalteraufnahme im Bereich des Aufnahmeschlitzes.

Eine Weiterbildung sieht vor, dass die Materialverdickung pilzartig ausgebildet ist. Durch diese pilzartige Materialverdickung wird ein sicherer Halt der Wand der Schalteraufnahme am Befestigungsteil gewährleistet. Auf diese Weise können sehr hohe Kräfte zwischen den Bauteilen übertragen werden, ohne dass der Befestigungszapfen aus dem Aufnahmeschlitz heraustritt.

Eine Variante sieht vor, dass die Materialverdickung symmetrisch ausgebildet ist. Bei einem anderen Ausführungsbeispiel ist die Materialverdickung asymmetrisch geformt, wodurch verhindert wird, dass die Materialverdickung einseitig über den Schalter bzw. die Grundform des Schalters, insbesondere der Schalteraufnahme im Bereich der Abschlusskante übersteht.

Vorteilhaft weist die Materialverdickung eine Scheibenform, insbesondere eine Teilkreisscheibenform auf. Dabei kann der Befestigungszapfen konisch ausgebildet sein, wodurch die Schalteraufnahme, insbesondere bei ebenfalls konisch ausgebildetem Aufnahmeschlitz zusätzlich an das Befestigungsteil herangeführt wird. Der Konus weist dabei mit seinem verjüngten Ende in Richtung auf das Befestigungsteil.

Mit Vorzug ist der Aufnahmeschlitz L-förmig ausgeführt und weist bei einer Variante an seinem inneren Schlitzende eine Hinterschneidung für den Befestigungszapfen auf, wodurch eine stabile Lage in der Verriegelungsstellung geschaffen wird.

Eine Weiterbildung ist durch die Merkmale der Ansprüche 9 bis 13 definiert. Hierdurch wird die Möglichkeit geschaffen, dass der Schalterteil und die Schalteraufnahme unabhängig von der Position des befestigten Schiebers stets eine definierte Lage zueinander besitzen, wobei auch der Schalterteil und der Befestigungsschieber definierte Positionen zueinander aufweisen, so dass eine automatische Montage ermöglicht wird.

Weitere Vorteile und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in den Ansprüchen und in der Beschreibung erwähnten Merkmale jeweils einzeln für sich oder in beliebiger Kombination erfindungswesentlich sein. In der Zeichnung zeigen:
- Figur 1: eine perspektivische Ansicht einer Schalteraufnahme;
- Figur 2: eine andere perspektivische Ansicht der Schalteraufnahme gemäß Figur 1;
- Figur 3: eine perspektivische Ansicht eines Befestigungsteils mit Schalterteil und Befestigungsschieber; und
- Figur 4: das in die Schalteraufnahme eingesetzte und verriegelte Befestigungsteil.

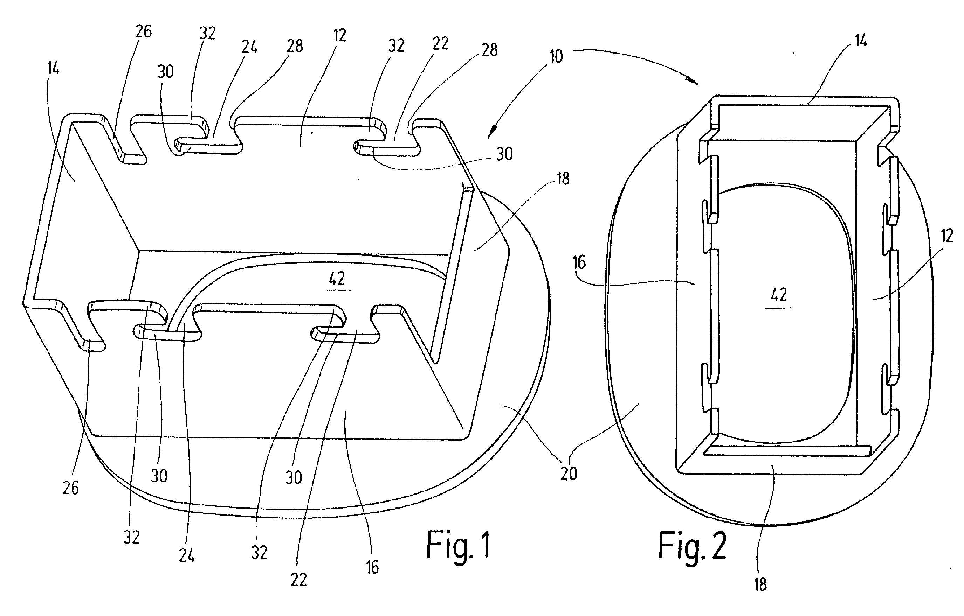

Die Figuren 1 und 2 zeigen eine insgesamt mit 10 bezeichnete Schalteraufnahme, die gehäuseartig ausgebildet ist und vier Seitenwände 12, 14, 16 und 18 aufweist und an einer nur schematisch darstellten Seitenplatte, z.B. einer Türblende 20, anliegt. Die beiden Seitenwände 12 und 16 sind mit Aufnahmeschlitzen 22, 24 und 26 versehen. Diese Aufnahmeschlitze 22, 24 und 26 sind randoffen und münden an der der Türblende 20 gegenüberliegenden Kante der Seitenwände 12 und 16 aus. Der Aufnahmeschlitz 26 erstreckt sich orthogonal zur Ebene der Türblende 20, wohingegen die beiden Aufnahmeschlitze 22 und 24 L-förmig ausgebildet sind und einen ersten Abschnitt 28 aufweisen, der sich orthogonal zur Türblende 20 erstreckt und aus der Seitenwand 12 bzw. 16 ausmündet, und einen zweiten Abschnitt 30 aufweisen, der sich parallel zur Ebene der Türblende 20 erstreckt und von einem Gehäuseabschnitt 32 übergriffen ist.

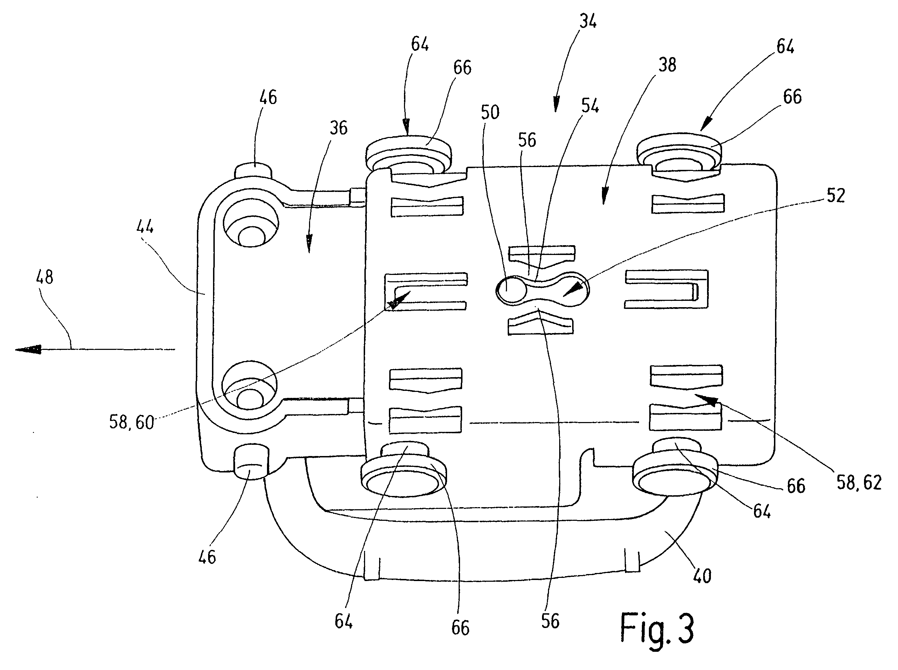

Die Figur 3 zeigt ein Befestigungsteil 34, welches in der Schalteraufnahme 10 befestigt werden soll. Dieses Befestigungsteil 34 wird von einem Schalterteil 36 und einem Befestigungsschieber 38 gebildet. Der Schalterteil 36 weist einen Abschnitt 40 auf, der die Türblende 20 durch eine Öffnung 42 teilweise durchgreift. Der andere Abschnitt 44 des Schalterteils 36 liegt dabei in der Schalteraufnahme 10 und wird u.a. von Zapfen 46 gehalten, die in die Aufnahmeschlitze 26 eingreifen. Auf der Rückseite des Schalterteils 36 befindet sich der Befestigungsschieber 38, der auf diesem Schalterteil 36 in der Figur 3 die Entriegelungsstellung einnimmt. Aus dieser Entriegelungsstellung ist der Befestigungsschieber 38 durch Verschieben in Richtung des Pfeils 48 in die Verriegelungsstellung überführbar. Die dargestellte Stellung wird gesichert, indem ein Zapfen 50, der von der Rückseite orthogonal abragt, in eine Öffnung 52 am Befestigungsschieber 38 eingreift, wobei die Öffnung 52 eine Engstelle 54 besitzt. Diese Engstelle 54 ist elastisch durch zwei Materialstege 56 ausgeführt, so dass der Zapfen 50 sicher entweder in der einen oder in der anderen Endlage innerhalb der Öffnung 52 gehalten wird.

Außerdem ist der Befestigungsschieber 38 mit Federelementen 58 versehen, die entweder als federnde Zungen 60 oder als abgekröpfte Stege 62 ausgebildet sind. Diese Zungen 60 bzw. Stege 62 ragen aus der Ebene des Befestigungsschiebers 38 in Richtung auf das Schalterteil 36 vor und liegen auf dessen Rückseite federnd auf.

Schließlich ist der Befestigungsschieber 38 seitlich mit Befestigungszapfen 64 versehen, die an ihrem freien Ende eine pilzförmigen Materialverdickung 66 aufweisen, welche scheibenartig ausgebildet ist. Der Abstand der Materialverdickungen 66 vom Befestigungsschieber 38 entspricht in etwa der Wandstärke der beiden Seitenwände 12 und 16.

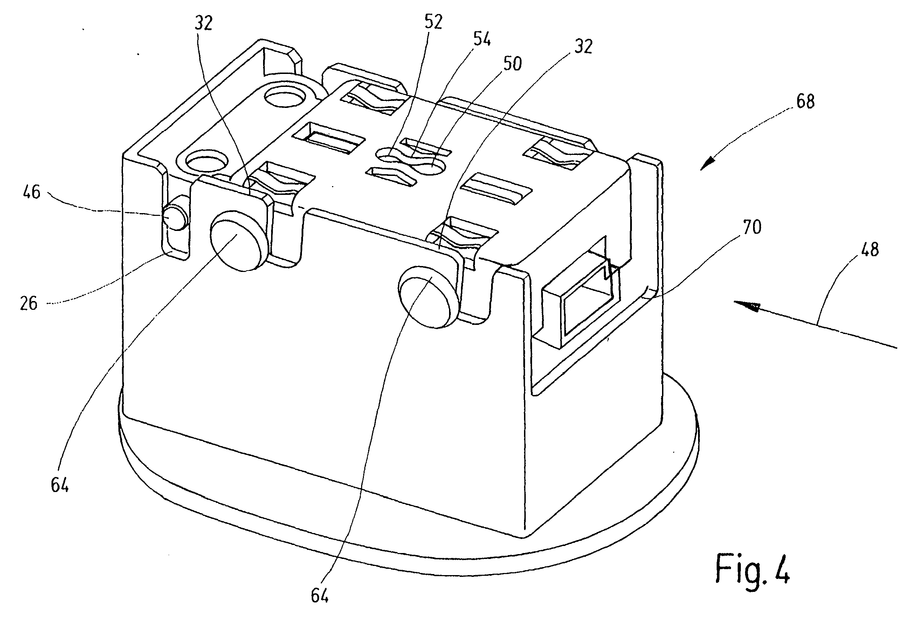

Die Figur 4 zeigt den montierten Schalter 68, bei dem das Befestigungsteil 34 sich in der Schalteraufnahme 10 befindet und der Befestigungsschieber 38 an der Schalteraufnahme 10 verriegelt ist. Dabei befinden sich die Zapfen 46 in den Aufnahmeschlitzen 26 und die Befestigungszapfen 64 in den zweiten Abschnitten 30 und sind von den Gehäuseabschnitten 32 übergriffen. Diese Verriegelungsstellung wird eingenommen, indem der Befestigungsschieber 38 in Richtung des Pfeils 48 in die Schalteraufnahme 10 eingeschoben wird, wofür die Seitenwand 18 der Schalteraufnahme 10 eine Aussparung 70 aufweist. Die Verriegelungsstellung des Befestigungsschiebers 38 ist stabil, da der Zapfen 50 in der Öffnung 52 durch die Engstelle 54 über die Materialstege 56 (Figur 3) gehalten wird. Außerdem wird der Schalterteil 38 über die Zungen 60 und Stege 62 an die Innenseite der Türblende 20 gedrückt.

Mit Vorzug können die zweiten Abschnitte 30 bzw. der Gehäuseabschnitt 32 mit einer kleinen Hinterschneidung versehen sein, so dass die in den Hinterschneidungen liegenden Befestigungszapfen 64 nicht ohne weiteres aus der in der Figur 4 dargestellten Position heraustreten können.

Ein derartiger Schalter 68 ist preiswert herzustellen, da die Schalteraufnahme 10 aus Kunststoff bestehen kann, da die Seitenwände 12 und 16 von den pilzartigen Materialverdickungen 66 gehalten und an einem Ausweichen gehindert werden. Außerdem ist die Montage relativ einfach und kann daher automatisch vorgenommen werden.

## Patentansprüche

1. Schalter (68) mit einer gehäuseartigen Schalteraufnahme (10) und einem in der Schalteraufnahme (10) zu befestigenden Befestigungsteil (34), wobei die Schalteraufnahme (10) oder das Befestigungsteil (34) wenigstens einen Aufnahmeschlitz (22, 24) und das Befestigungsteil (34) oder die Schalteraufnahme (10) einen im Aufnahmeschlitz (22, 24) festlegbaren Befestigungszapfen (64) aufweisen, wobei der Befestigungszapfen (64) vom Aufnahmeschlitz (22, 24) geführt wird und diesen durchsetzt, **dadurch gekennzeichnet, dass** der Befestigungszapfen (64) ein freies Ende aufweist, welches mit einer Materialverdickung (66) versehen ist.

2. Schalter nach Anspruch 1, **dadurch gekennzeichnet, dass** die Materialverdickung (66) pilzartig ausgebildet ist.

3. Schalter nach Anspruch 1 oder 2, **dadurch gekennzeichnet, dass** die Materialverdickung (66) symmetrisch ausgebildet ist.

4. Schalter nach Anspruch 1 oder 2, **dadurch gekennzeichnet, dass** die Materialverdickung (66) asymmetrisch ausgebildet ist.

5. Schalter nach einem der vorhergehenden Ansprüche, **dadurch gekennzeichnet, dass** die Materialverdickung (66) eine Scheibenform aufweist.

6. Schalter nach Anspruch 5, **dadurch gekennzeichnet, dass** die Scheibenform teilkreisscheibenartig ist.

7. Schalter nach einem der vorhergehenden Ansprüche, **dadurch gekennzeichnet, dass** der Befestigungszapfen (64) konisch ist.

8. Schalter nach einem der vorhergehenden Ansprüche, **dadurch gekennzeichnet, dass** der Aufnahmeschlitz (22, 24) L-förmig ist.

9. Schalter nach einem der vorhergehenden Ansprüche, **dadurch gekennzeichnet, dass** das Befestigungsteil (34) einen Schalterteil (36) und einen Befestigungsschieber (38) aufweist, wobei der Befestigungsschieber (38) bezüglich des Schalterteils (36) verschieblich an diesem gelagert ist.

10. Schalter nach Anspruch 9, **dadurch gekennzeichnet, dass** der Schalterteil (36) unverschieblich in der Schalteraufnahme (10) festlegbar ist.

11. Schalter nach Anspruch 9 oder 10, **dadurch gekennzeichnet, dass** der Schalterteil (36) ein Rastsystem für den Befestigungsschieber (38) aufweist, über welches der Befestigungsschieber (38) in der Entriegelungsstellung und/oder in der Verriegelungsstellung definiert am Schalterteil (36) gehalten ist.

12. Schalter nach einem der Ansprüche 9 bis 11, **dadurch gekennzeichnet, dass** der Schalterteil (36) und/oder der Befestigungsschieber (38) Federelemente (58) zum Spielausgleich zwischen dem Schalterteil (36) und dem Befestigungsschieber (38) aufweist.

13. Schalter nach Anspruch 12, **dadurch gekennzeichnet, dass** die Federelemente (58) zungen- oder stegartige Federn (60, 62) sind, die aus der Ebene des einen Bauteils in Richtung des anderen Bauteils elastisch vorstehen.

## Claims

1. Switch with a box-like switch enclosure (10) and a fastening member (34) that can be mounted within the switch enclosure (10), wherein the switch enclosure (10) or the fastening member (34) feature at least one retainer slot (22, 24) and the fastening member (34) or the switch enclosure (10) has a peg attachment (64) that can be adjusted within the retainer slot (22, 24), whereby the peg attachment is guided by the retainer slot (22, 24) and penetrates it, **characterised in that** the peg attachment (64) exhibits a free end that is provided with a material swelling (66).

2. Switch according to claim 1, **characterised in that** the material swelling (66) has a fungoid shape.

3. Switch according to claim 1 or 2, **characterised in that** the material swelling (66) is shaped symmetrically.

4. Switch according to claim 1 or 2, **characterised in that** the material swelling (66) is shaped asymmetrically.

5. Switch according to any of the preceding claims, **characterised in that** the material swelling (66) is wheel shaped.

6. Switch according to claim 5, **characterised in that** the wheel shape takes the form of a partial circular disc.

7. Switch according to any of the preceding claims, **characterised in that** the peg attachment (64) is conical.

8. Switch according to any of the preceding claims, **characterised in that** the retainer slot (22, 24) is L-shaped.

9. Switch according to any of the preceding claims, **characterised in that** the fastening member (34) exhibits a switching member (36) and a slide attachment (38), whereby the slide attachment (38) is mounted for progressive adjustment with respect to the switching member (36).

10. Switch according to claim 9, **characterised in that** the switching member (36) can be immovably mounted in the switch enclosure (10).

11. Switch according to claim 9 or 10, **characterised in that** the switching member (36) exhibits a snap-in locking system for the slide attachment (38), by means of which the slide attachment (38) is held in the release position and/or in the locking position defined on the switching member (36).

12. Switch according to any one of claims 9 to 11, **characterised in that** the switching member (36) and/or the slide attachment (38) are provided with spring elements (58) for play adjustment between the switching member (36) and the slide attachment (38).

13. Switch according to claim 12, **characterised in that** the spring elements (58) are tongue-like or bar-like springs (60, 62) that resiliently protrude from the plane of the one component in the direction of the other component.

## Revendications

1. Interrupteur (68) avec un logement d'interrupteur en forme de boîtier (10) et un élément de fixation (34) à fixer dans le logement d'interrupteur (10), dans lequel le logement d'interrupteur (10) ou l'élément de fixation (34) présente au moins une encoche réceptrice (22, 24) et l'élément de fixation (34) ou le logement d'interrupteur (10) présente un téton de fixation (64) qui peut s'engager dans l'encoche réceptrice (22, 24), le téton de fixation (64) étant guidé par l'encoche réceptrice (22, 24) et la traversant, **caractérisé en ce que** le téton de fixation (64) présente une extrémité libre qui est munie d'une surépaisseur de matière (66).

2. Interrupteur selon la revendication 1, **caractérisé en ce que** la surépaisseur de matière (66) est réalisée en forme de champignon.

3. Interrupteur selon la revendication 1 ou la revendication 2, **caractérisé en ce que** la surépaisseur de matière (66) est réalisée avec une forme symétrique.

4. Interrupteur selon la revendication 1 ou la revendication 2, **caractérisé en ce que** la surépaisseur de matière (66) est réalisée avec une forme asymétrique.

5. Interrupteur selon l'une des revendications précédentes, **caractérisé en ce que** la surépaisseur de matière (66) présente la forme d'un disque.

6. Interrupteur selon la revendication 5, **caractérisé en ce que** la forme de disque est semblable à un segment discoïdal.

7. Interrupteur selon l'une des revendications précédentes, **caractérisé en ce que** le téton de fixation (64) est conique.

8. Interrupteur selon l'une des revendications précédentes, **caractérisé en ce que** l'encoche réceptrice (22, 24) est en forme de L.

9. Interrupteur selon l'une des revendications précédentes, **caractérisé en ce que** l'élément de fixation (34) présente un élément interrupteur (36) et une coulisse de fixation (38), la coulisse de fixation (38) étant supportée sur l'élément interrupteur (36) de manière mobile par rapport à celui-ci.

10. Interrupteur selon la revendication 9, **caractérisé en ce que** l'élément interrupteur (36) peut se monter de manière immobile dans le logement d'interrupteur (10).

11. Interrupteur selon la revendication 9 ou la revendication 10, **caractérisé en ce que** l'élément interrupteur (36) présente un système d'encliquetage pour la coulisse de fixation (38) par l'intermédiaire duquel la coulisse de fixation (38) est maintenue de manière définie en position déverrouillée et/ou en position verrouillée sur l'élément interrupteur (36).

12. Interrupteur selon l'une des revendications 9 à 11, **caractérisé en ce que** l'élément interrupteur (36) et/ou la coulisse de fixation (38) présente des éléments à ressort (58) pour compenser le jeu entre l'élément interrupteur (36) et la coulisse de fixation (38).

13. Interrupteur selon la revendication 12, **caractérisé en ce que** les éléments à ressort (58) sont des ressorts de type languette ou nervure (60, 62) qui dépassent élastiquement du plan de l'un des composants en direction de l'autre composant.
